# EUROPEAN PATENT APPLICATION

(11) **EP 3 913 606 A1**
(43) Date of publication of application: **24.11.2021**
(21) Application number: 20875393.9
(22) Date of filing: 30.09.2020
(51) Int. Cl.: G09F 7/16, H04N 1/32

(54) **SIGN DISPLAY MEMBER**

(30) Priority: 07.10.2019 JP 2019184749
(71) Applicant: Euroke-Technoparts Co., Ltd., Kobe-shi Hyogo, 651-2129 (JP)
(72) Inventor: TAKENAKA Fukuyasu, Akashi-shi Hyogo 673-0001 (JP)
(74) Representative: Geskes, Christoph
(86) International application number: PCT/JP2020/037350
(87) International publication number: WO 2021/070721

(57) **Abstract**

The present invention provides a marking element that enables to suppress counterfeiting specific information by making specific information made by electronic watermark pattern hard to be read.

The marking element comprising: a marking 3 formed in a base plate 2 with background pattern 6 comprising engraved recesses 5 made by irradiating the base plate 2 with a laser; an identifying mark 9 formed with recesses 8 made by overwrite-engraving the background pattern 6 with the laser, the recesses 8 being deeper than the recesses 5 of the background pattern 6; and a hidden mark 11 with recesses 10 made by overwrite-engraving the part different from the part of the identifying mark 9 in the background pattern 6 with the laser, the recesses 10 are formed to be deeper than the background pattern 6, wherein the hidden mark11 having different recognition form from the identifying mark 9.

## Description

### [Technical Field]

The present invention relates to a marking element attached on a product to distinguish the product from other products of the same type.

### [Background Art]

An unmanned flight vehicle such as a drone, as an industrial product, is considered to have a marking element attached similar to a license plate of a car to distinguish the drone from other drones. A unique number such as a product number is written by this marking element to distinguish the product from other products. In addition to the unique number, specific information to specify the name of suppliers, such as manufacturer and seller, serial number, manufacturing date are written on the marking element. It is common knowledge of one skilled in the art to use a laser marker in such writing. In the method of writing using a laser marker, information writing is done by irradiating the surface of a base plate made of metal with a laser to form engraved recesses.

On the other hand, if specific information as above is counterfeited, it would lead to lack of fairness in distribution or trade management, there is a need to make specific information hard to be read. Therefore, it has been developed technology to write specific information using electronic watermark pattern (See Patent Document 1, for example).

The method described in Patent Document 1 is to form a character or background image with electronic watermark pattern, and the character or background image becomes the unique number of a product. That is, the method described in Patent Document 1 is to make the unique number by the electronic watermark pattern. In this configuration, specific information is obtained by reading the electronic watermark pattern formed inside of the character or background image.

### [Prior Art Documents]

### [Patent Documents]

Patent Document 1: Japanese Unexamined Patent Application Publication No. 2009-118293

### [Summary of the Invention]

### [Technical Problems to be Solved]

However, the method described in Patent Document 1 has a problem that it is hard to prevent counterfeiting because the electronic watermark pattern could be read easily by a magnifying lens, etc.

The present invention has been made to solve such a problem, and the purpose of the present invention is to provide a marking element that enables to suppress counterfeiting specific information by making specific information made by electronic watermark pattern hard to be read.

### [Means for Solving the Problem]

The marking element of the present invention comprises a marking formed in a base plate with background pattern comprising engraved recesses made by irradiating the base plate with a laser; an identifying mark formed with recesses made by overwrite-engraving the background pattern with the laser, the recesses being deeper than the recesses of the background pattern; and a hidden mark with recesses made by overwrite-engraving the part different from the part of the identifying mark in the background pattern with the laser, the recesses are formed to be deeper than the recesses of the background pattern, wherein the hidden mark having different recognition form from the identifying mark.

The marking element of the present invention comprises a marking formed in a base plate with background pattern comprising engraved recesses made by irradiating the base plate with a laser; an identifying mark formed with recesses made by overwrite-engraving the background pattern with the laser, the recesses being deeper than the recesses of the background pattern; and a hidden mark with recesses made by overwrite-engraving the part different from the marking on the base plate with the laser, wherein the hidden mark having different recognition form from the identifying mark.

The marking element of the present invention comprises a marking formed in a base plate with background pattern comprising engraved recesses made by irradiating the base plate with a laser; an identifying mark formed with a second background pattern recesses comprising engraved recesses made by irradiating the part different from the marking on the base plate with the laser; and a hidden mark with recesses made by overwrite-engraving the second background pattern with the laser, the recesses are formed to be deeper than the recesses of the second background pattern, wherein the hidden mark having different recognition form from the identifying mark.

In the present invention, the marking element is characterized by that the recognition form of the identifying mark is visualization by a magnifying lens, and the recognition form of the hidden mark is pattern recognition of camera images.

Also, the marking element is characterized by that the depth of the recesses of the identifying mark and the depth of the recesses of the hidden mark are equal.

Also, the marking element is characterized by that the recesses of the identifying mark and the recesses of the hidden mark are engraved by irradiating of the laser at the same time.

Also, the marking element is characterized by that the recesses of the hidden mark are formed deeper than the recesses of the identifying mark.

Also, the marking element is characterized by that the recesses of the identifying mark are formed across the plural recesses of the background pattern, and the recesses of the hidden mark are formed inside of one of the recesses of the background pattern.

Also, the marking element is characterized by that the base plate is a secondary electrolytic colored aluminum plate.

Also, the marking element is characterized by that the identifying mark is a mark suggesting a business operator using the base plate as a mark, and the hidden mark is a mark comprising a coined word suggesting secretly the business operator.

### [Effects of the Invention]

According to the present invention, it becomes possible to suppress counterfeiting specific information because it makes specific information made with electronic watermark pattern hard to be read.

### [Brief Descriptions of the Drawings]

- [Fig. 1]: This figure shows front view of a marking element according to the first embodiment of the present invention.
- [Fig. 2]: (A) and (B) in this figure show front view and enlarged front view of the marking element, respectively.
- [Fig. 3]: (A) and (B) in this figure show partial cross-sectional views of a base plate.
- [Fig. 4]: This figure is a flow chart of manufacturing process and true/false determination of the marking element.
- [Fig. 5]: These figures show a front view of other examples of background pattern.
- [Fig. 6]: This figure shows partial cross-sectional view of a base plate according to the second embodiment of the present invention.
- [Fig. 7]: (A) and (B) in this figure show partial cross-sectional views of a base plate according to the third embodiment of the present invention.
- [Fig. 8]: These figures show front view and enlarged front view of a marking element according to the fourth embodiment of the present invention.
- [Fig. 9]: These figures show front view and enlarged front view of a marking element according to the fifth embodiment of the present invention.

### [Description of the Embodiments]

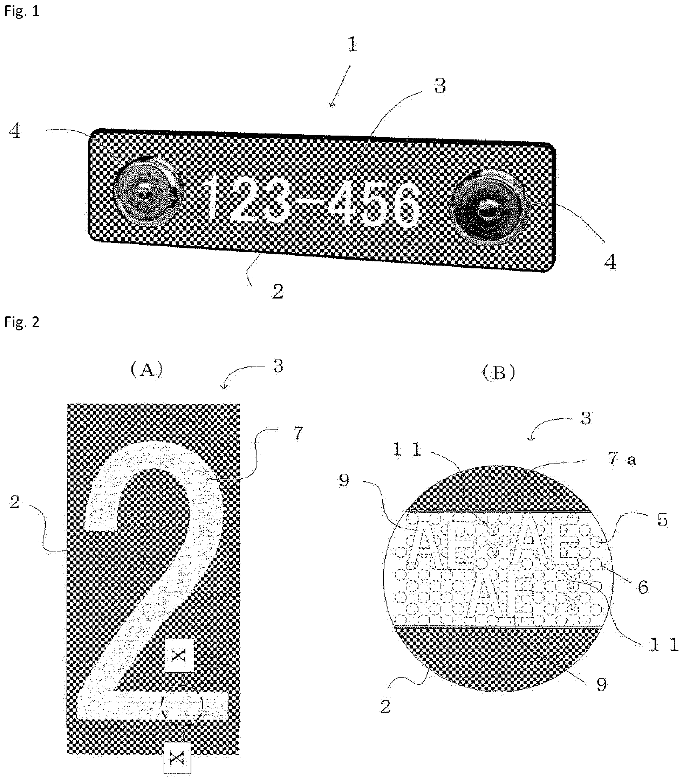

Figs. 1 to 3 show a marking element 1 according to the first embodiment of the present invention. The marking element 1 is used to distinguish a product such as a drone from other same type of products by attaching the marking element 1 on the product. As shown in Fig. 1, the marking element 1 has a base plate 2 of elongated rectangular shape, and a marking 3 is formed on the base plate 2 visibly. The base plate 2 may be of circle, polygon, or any other shape. The marking 3 of this embodiment is the characters "123-456". Two clasps 4 are arranged at both ends of the base plate 2 and astride the marking 3. The clasp 4 comprises combination of a screw and a rod, and fixed at a proper place of the product irremovably.

The base plate 2 is made of secondary electrolytic colored aluminum plate. That is, the aluminum plate is applied anodized coating with direct current anodizing process, then is electrolyzed again (secondary electrolysis treatment). The anodized coating is colored with metal compound precipitated by conducting the secondary electrolysis treatment in metallic salt solution of tin, nickel or copper, etc. The coating thus made on the base plate 2 is hard coating and has advantage that the coating cannot be peeled off easily even if the coating is exposed to impact or high temperature

In this embodiment, a marking 3 formed in a base plate with background pattern 6 comprising engraved recesses 5 made by irradiating the base plate with a laser; an identifying mark 9 formed with recesses 8 made by overwrite-engraving the background pattern 6 with the laser, the recesses 8 being deeper than the recesses 5 of the background pattern 6; and a hidden mark 11 with the recesses 10 made by overwrite-engraving the part different from the part of the identifying mark 9 in the background pattern 6 with the laser, the recesses 10 are formed to be deeper than the recesses 5 of the background pattern 6.

The marking 3 corresponds to each character of characters "123-456" shown in Fig. 1. Each character of the marking 3 is formed by background pattern 6 comprising engraved recesses 5 made by irradiating the base plate with a laser. Fig. 2 (A) shows character 7 consisting of "2", and Fig. 2 (B) shows the enlarged dotted lined circle part in Fig. 2 (A).

As shown in Fig. 2 (B), the background pattern 6, comprising aggregate of recesses 5 shaped small circular dot formed by laser irradiation, is formed on the base plate 2. The character 7 of "2" is formed by this. In the marking 3 of this embodiment, the outlines of a character are formed in advance by laser irradiation, then the background pattern 6 is formed inside of the contour. Reference 7a shows the recesses for contours to form the character 7.

The identifying mark 9 and the hidden mark 11 are formed by overwrite-engraving the background pattern 6 with the laser, after the background pattern 6 is engraved. The identifying mark 9 and the hidden mark 11 are electronic watermark pattern. In Fig. 2 (B), characters "AE" in horizontal writing are the identifying mark 9, and the two "Y" characters are the hidden mark 11.

The identifying mark 9 is specific information to specify the name of suppliers, such as manufacturer and seller, serial number, manufacturing date, etc., and the information of the product such as manufacturer is known by reading the identifying mark 9.

The identifying mark 9 is formed by overwrite-engraving the background pattern 6 forming area with the laser. In this embodiment, characters "A" and "E" positioned side by side are described by recesses 8 engraved by the laser. Thus, the identifying mark 9 is inconspicuous by forming the identifying mark 9 by overwrite-engraving the background pattern 6 with the laser. The recesses 8 of the identifying mark 9 are formed deeper than the recesses 5 of the background pattern 6, by irradiating stronger laser output adjusted that much.

The hidden mark 11 is formed with the recesses 10 made by overwrite-engraving the part different from the part of the identifying mark 9 in the background pattern 6 forming area with the laser. Thus, the hidden mark 11 and the identifying mark 9 are formed in the background pattern 6 forming area, without overlapping. In this embodiment, the hidden mark 11 comprising character "Y" is formed between adjacent identifying marks 9. The recesses 10 of the hidden mark 11 is formed, as the recesses 8 of the identifying mark 9, deeper than the recesses 5 of the background pattern 6, by irradiating stronger laser output adjusted that much.

The recesses 8 forming the identifying mark 9 and the recesses 10 forming the hidden mark 11 should be deeper than the recesses 5 of the background pattern 6, and the recesses 8 and the recesses 10 may be the same depth. The laser irradiating to form the identifying mark 9 and the laser irradiating to form the hidden mark 11 may be done at the same time or separately. The number of irradiating the laser may be reduced by irradiating at the same time.

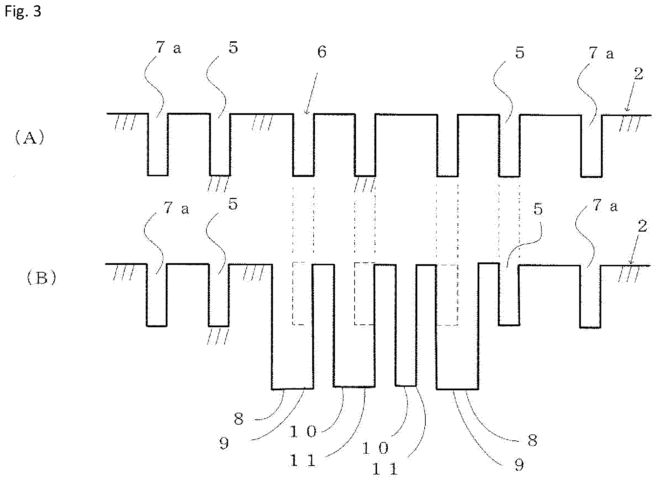

Fig. 3 (A) shows partial cross-sectional view of the background pattern 6 formed on the base plate by the laser irradiating, and corresponds to X-X line of Fig. 2. The recesses 5 forming the background pattern 6 are formed on the base plate 2 with the same depth.

Fig. 3 (B) shows partial cross-sectional view of the identifying mark 9 and the hidden mark 11 formed on the base plate 2 by the laser irradiating after the background pattern 6 is formed. The recesses 8 of the identifying mark 9 and the recesses 10 of the hidden mark 11 are formed deeper than the recesses 5 of the background pattern 6. By this, the identifying mark 9 and the hidden mark 11 can be read because the identifying mark 9 and the hidden mark 11 would have brightness difference (contrast) from the background pattern 6.

Here, the identifying mark 9 comprising the recesses 8 is visible by a magnifying lens. On the other hand, the hidden mark 11 comprising the recesses 10 is recognized in pattern by images taken by a camera equipped in a smart phone or a mobile phone. The hidden mark 11, at a glance, is not specific information to specify the name of suppliers, such as manufacturer and seller, serial number, manufacturing date, etc., but a meaningless mark, and a third party would not recognize the hidden mark 11 as information regarding a product. The hidden mark 11 may comprise coined word, etc. to suggest a supplier secretly. An electronic device to read marks would memorize the pattern of the mark, and would be able to confirm the true/false of the mark by collating the read pattern and the memorized pattern. By this way, judging whether a marking element is counterfeit or not can be done for the first time by not only reading the identifying mark 9 but also collating the hidden mark 11 and a memorized pattern.

The depth of the recesses 5 of the background pattern 6, the depths of the recesses 8 of the identifying mark 9 and the recesses 10 of the hidden mark 11 may be varied according to the material of the base plate 2 in which the recesses are formed.

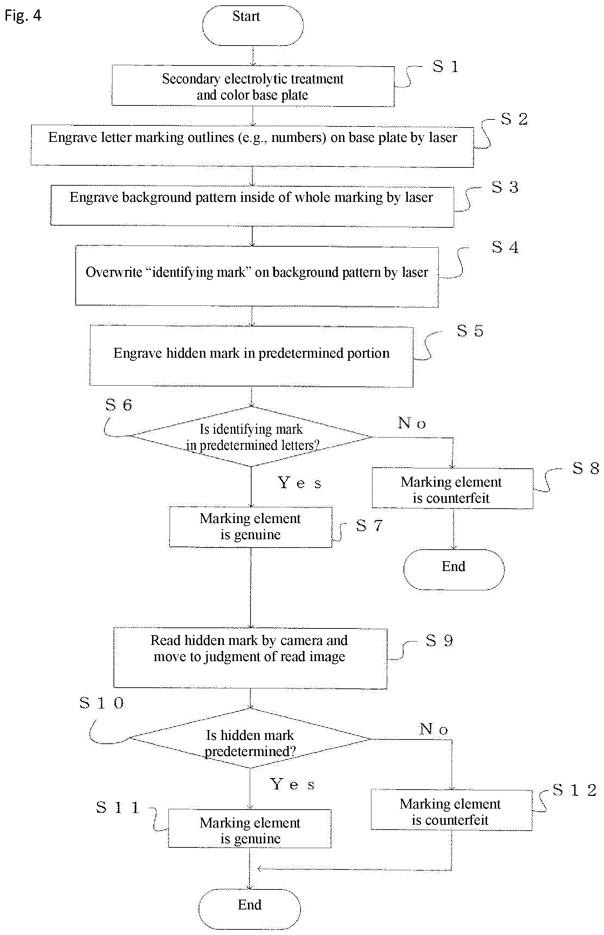

Fig. 4 shows a flow chart to show an example of manufacturing process and true/false determination of the marking element.

In step S1, the base plate 2 is secondary electrolytic treated and colored. Then letter outlines 7a of marking 3 are formed on base plate 2 by laser irradiating (step S2). Then background pattern 6 comprising recesses 5 is formed by laser irradiating on the marking 3 (step S3). Then, identifying mark 9 comprising recesses 8 is formed by laser irradiating on the background pattern 6 (step S4). Then, the hidden mark 11 comprising recesses 10 is formed by laser irradiating in the part different from the identifying mark 9 in the background pattern 6 forming area (step S5). Thus, the marking element 1 is made.

In the marking element 1 thus made, the identifying mark 9 is read visually by using a magnifying lens, and determine whether the identifying mark 9 is predetermined specific information or not (step S6). If the identifying mark 9 is specific information, the marking element 1 is determined to be genuine (step S7), and if the identifying mark 9 is not specific information, the marking element 1 is determined to be counterfeited (step S8) and the true/false determination of the marking element 1 ends with this. The hidden mark 11 also may be read by a magnifying lens, but the hidden mark 11 at a glance is a meaningless mark, and may not be information for the true/false determination of the marking element 1 as the identifying mark 9.

When the marking element 1 is determined to be genuine at step S7, the image of the hidden mark 11 is read by scanning the background pattern 6 with a camera equipped in an electronic device, then move to judgment of the read image (step S9). In this judgment of the read image, the read image is collated with the pattern memorized in the electronic device (step S10). That is, the true/false determination of the marking element 1 is done according to whether the hidden mark 11 matches with the pattern stored in the electronic device or not (step S11, step S12). Thus, the true/false of the marking element 1 may be determined. A counterfeited marking element 1 may be found by this further true/false determination of the hidden mark 11, even if the identifying mark 9 is counterfeited.

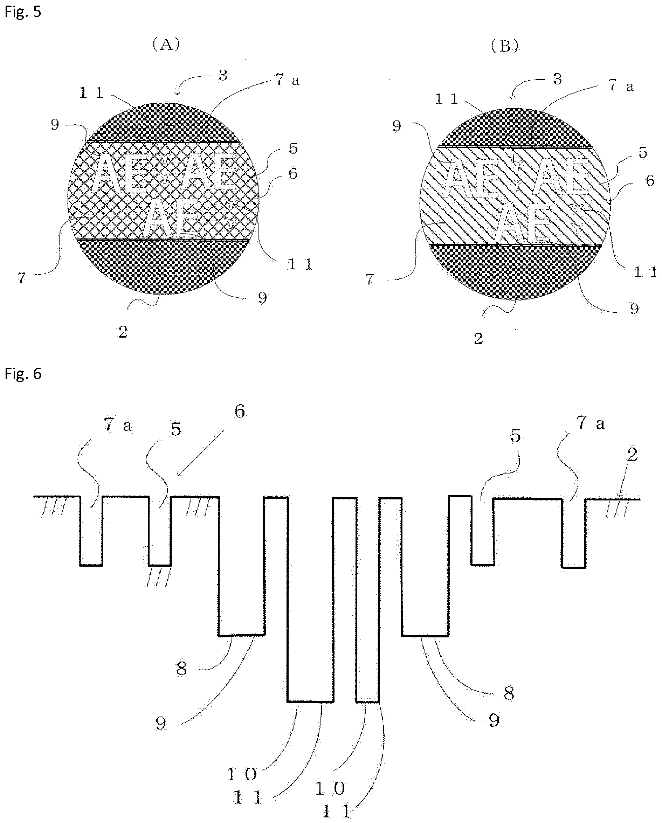

Fig. 5 shows modified examples of the background pattern 6 formed on the base plate 2. The background pattern 6 may be formed by recesses 5 comprising cross-hatched grooves, as shown in Fig. 5 (A), or the background pattern 6 may be formed by recesses 5 comprising one-way hatched grooves, as shown in Fig. 5 (B).

Fig. 6 shows the second embodiment of the present invention. In this embodiment, the identifying mark 9 is formed by overwrite-engraving on the background pattern 6 forming area with the laser, and the hidden mark 11 is formed by overwrite-engraving in the part different from the identifying mark 9 in the background pattern 6 forming area. In this embodiment, the recesses 10 of the hidden mark 11 is formed deeper than the recesses 8 of the identifying mark 9. This can be done by gradual laser irradiating and at the same time the hidden mark 11 is formed by stronger laser output than the laser output used when the identifying mark 9 is formed.

In the embodiment shown in Fig. 6, the identifying mark 9 is visible as specific information by a magnifying lens. On the other hand, however, the hidden mark 11 in the deep recess 10 is hard to recognize by a magnifying lens because of the brightness difference. Even if the hidden mark 11 is visible by a magnifying lens, just looking at the hidden mark 11 is not enough to recognize it as specific information, as the identifying mark 9, because the hidden mark 11 is a meaningless mark. As for the hidden mark 11, the true/false determination thereof is done that the hidden mark 11 is taken image by a camera equipped in an electronic device, then the taken camera image is collated and the pattern memorized in the electronic device.

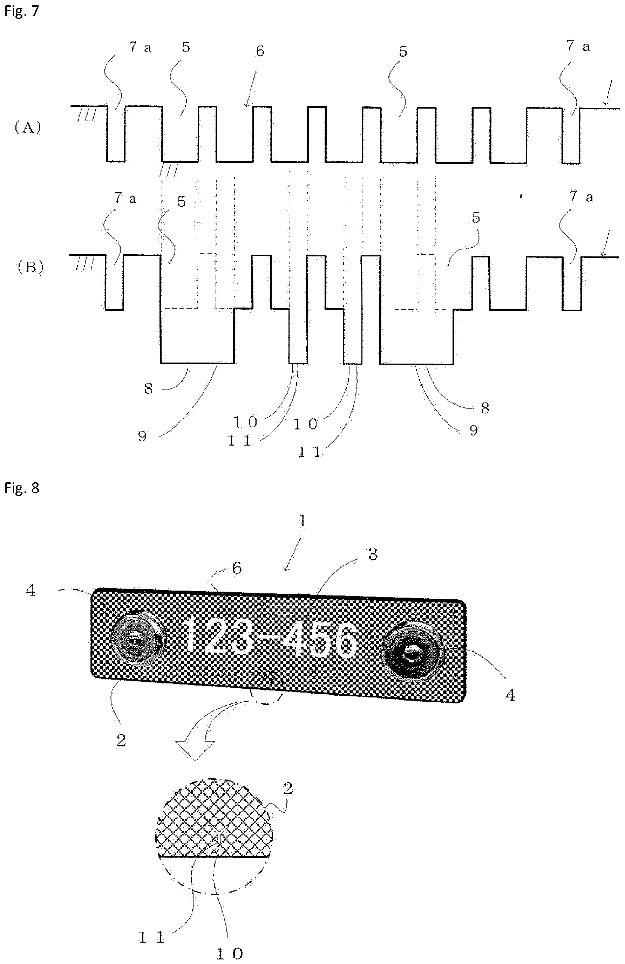

Fig. 7 shows the second embodiment of the present invention, and Fig. 7 (A) shows the state that the background pattern 6 is formed on the base plate 2, and Fig. 7 (B) shows the state that the identifying mark 9 and the hidden mark 11 are formed on the base plate 2.

The background pattern 6 is made with aggregate of plural recesses 5 engraved by laser irradiation on the base plate 2. Each of the recesses 5 is shaped small circular dot, as shown in Fig. 2 (B). The identifying mark 9 and the hidden mark 11 are formed by overwrite-engraving the background pattern 6 forming area with the laser, without overlapping the forming areas of the identifying mark 9 and the hidden mark 11.

The identifying mark 9 is specific information to specify the name of suppliers, such as manufacturer and seller, serial number, manufacturing date, etc., and the information of a product such as manufacturer can be known by reading the identifying mark 9. The identifying mark 9 is formed with the recesses 8 made by overwrite-engraving the background pattern 6 forming area with the laser.

The hidden mark 11 is not specific information as the identifying mark 9, and is meaningless mark at a glance. The hidden mark 11 is also formed with the recesses 10 made by overwrite-engraving the background pattern 6 forming area with the laser. The identifying mark 9 and the hidden mark 11 can be read due to brightness difference between the recesses 8, 10, and the background pattern 6, because the recesses 8 and 10 are formed deeper than the recesses 5 of the background pattern 6.

In this embodiment, the recesses 8 of the identifying mark 9 is formed across the plural recesses 5 of the background pattern 6, as shown in Fig. 7 (B). On the other hand, the recesses 10 of the hidden mark 11 are formed inside of one of the recesses 5 in the background pattern 6. The identifying mark 9 is visible by a magnifying lens because the recess 8 of the identifying mark 9 is formed across the plural recesses 5 of the background pattern 6.

On the other hand, the recesses 10 of the hidden mark 11 are located inside of one of the recesses 5 in the background pattern 6, it is hard to read by a magnifying lens. Moreover, if the hidden mark 11 is read by a magnifying lens, the hidden mark 11 would not be recognized as specific information as the identifying mark 9 because the hidden mark 11 is a meaningless mark at a glance. Pattern recognition of a camera equipped in an electronic device would be done for the hidden mark 11. That is, the hidden mark 11 can be recognized with the pattern according to the read image of a camera equipped in an electronic device.

In this embodiment, whether a marking element is counterfeit or not can be judged by not only reading the identifying mark 9 but also collating the hidden mark 11 and a memorized pattern.

Fig. 8 shows the marking element 1 according to the fourth embodiment of the present invention. In this embodiment, marking 3 comprising the characters "123-456" is formed by the background pattern 6, as the first embodiment of the present invention. The identifying mark 9 comprising characters "AE" is formed by overwrite-engraving the background pattern 6 with the laser, same as shown in Fig. 2 (A) and (B). The identifying mark 9 is formed to be the recesses 8 deeper than the recesses 5 of the background pattern 6 (See Fig. 3 (B)). The identifying mark 9 becomes inconspicuous by forming the identifying mark 9 by overwrite-engraving the background pattern 6 with the laser. The identifying mark 9 can be read by a magnifying lens.

In this embodiment, the hidden mark 11 is not formed in the background pattern 6 of the marking 3. The hidden mark 11 is formed in a part different from the marking 3 in the base plate 2. The recesses 10 comprising character "Y" formed by engraving part different from the marking 3 in the base plate 2 with the laser is the hidden mark 11. Thus, in this embodiment, the hidden mark 11 is formed in a part different from the marking 3 (the background pattern 6).

In this embodiment, the identifying mark 9 is specific information to specify the name of suppliers, such as manufacturer and seller, serial number, manufacturing date, etc., and the information such as manufacturer can be known by reading the identifying mark 9 by a magnifying lens.

The hidden mark 11 is not specific information, but is a meaningless mark at a glance. In this embodiment, because the hidden mark 11 is not formed in the background pattern 6 of the marking 3, the hidden mark 11 is not visible when the identifying mark 9 is read from the background pattern 6. The hidden mark 11 can be read by scanning the part other than the background pattern 6 (the marking 3) in the base plate 2 with an electronic device such as a camera, and judging whether the marking element 1 is counterfeit or not can be done by collating the read image pattern and the image pattern memorized in the electronic device. Therefore, whether a marking element is counterfeit or not can be judged by not only reading the identifying mark 9 but also collating the hidden mark 11 and a memorized pattern.

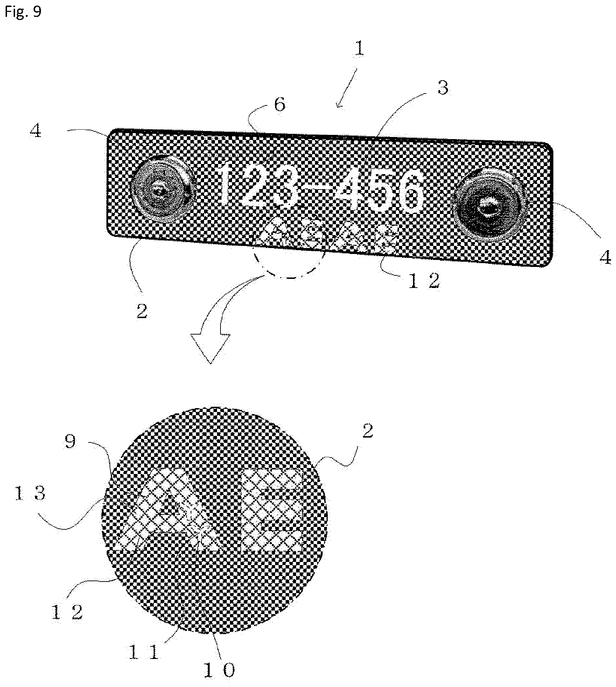

Fig. 9 shows the marking element 1 according to the fifth embodiment of the present invention. In this embodiment, marking 3 comprising the characters in the base plate 2 is formed by the background pattern 6 comprising the recesses 5 shaped small circular dot, as the fourth embodiment of the present invention.

On the other hand, the identifying mark 9 is formed in the part different from the marking 3. The identifying mark 9 is formed by the second background pattern 12 formed in the base plate 2. The second background pattern 12 is formed by irradiating the part different from the marking 3 in the base plate 2 by the laser, and in this embodiment, the second background pattern 12 is formed the recesses 13 comprising cross-hatched grooves.

On the other hand, the hidden mark 11 is formed by overwrite-engraving the second background pattern 12 with the laser. That is, the hidden mark 11 in this embodiment is formed by overwrite-engraving the background pattern 9. The recesses 10 of the hidden mark 11 is formed deeper than the recesses 13 of the second background pattern 12 comprising the identifying mark 9.

In this embodiment, the identifying mark 9 as specific information to specify the name of suppliers, such as manufacturer and seller, serial number, manufacturing date, etc. can be recognized by visually or by a magnifying lens. On the other hand, the hidden mark 11 is hard to read because the hidden mark 11 is embedded in the identifying mark 9 and also in the deep recesses 13. Also, the hidden mark 11 would not be recognized as specific information as the identifying mark 9, if seen by a magnifying lens, because the hidden mark 11 is a meaningless mark in just looking at. Therefore, the marking element 1 according to the present invention can prevent to be counterfeited. The counterfeiting can be surely prevented by the configuration that true/false determination of the hidden mark 11 is done with pattern recognition of a camera equipped in an electronic device.

### [List of Reference Numbers]

- 1:: marking element
- 2:: base plate
- 3:: marking
- 5:: recesses (of background pattern)
- 6:: background pattern
- 7:: letter(s)
- 8:: recesses (of identifying mark)
- 9:: identifying mark
- 10:: recesses (of hidden mark)
- 11:: hidden mark
- 12:: second background pattern
- 13:: recesses (of second background pattern)

## Claims

1. A marking element comprising:
a marking formed in a base plate with background pattern comprising engraved recesses made by irradiating the base plate with a laser;
an identifying mark formed with recess made by overwrite-engraving the background pattern with the laser, the recesses being deeper than the recesses of the background pattern;
a hidden mark with recesses made by overwrite-engraving the part different from the part of the identifying mark in the background pattern with the laser, the recesses are formed to be deeper than the background pattern, wherein the hidden mark having different recognition form from the identifying mark.

2. A marking element comprising:
a marking formed in a base plate with background pattern comprising engraved recesses made by irradiating the base plate with a laser;
an identifying mark formed with recesses made by overwrite-engraving the background pattern with the laser, the recesses being deeper than the recesses of the background pattern;
a hidden mark with recesses made by overwrite-engraving the part different from the marking on the base plate with the laser, wherein the hidden mark having different recognition form from the identifying mark.

3. A marking element comprising:
a marking formed in a base plate with background pattern comprising engraved recesses made by irradiating the base plate with a laser;
an identifying mark formed with a second background pattern recesses comprising engraved recesses made by irradiating the part different from the marking on the base plate with the laser;
a hidden mark with recesses made by overwrite-engraving the second background pattern with the laser, the recess is formed to be deeper than the recesses of the second background pattern, wherein the hidden mark having different recognition form from the identifying mark.

4. A marking element described in any one of Claims 1 to 3, wherein the recognition form of the identifying mark is visualization by a magnifying lens, and the recognition form of the hidden mark is pattern recognition of camera images.

5. A marking element described in Claim 1, wherein the depth of the recesses of the identifying mark and the depth of the recesses of the hidden mark are equal.

6. A marking element described in Claim 1, wherein the recesses of the identifying mark and the recesses of the hidden mark are engraved by irradiating of the laser at the same time.

7. A marking element described in Claim 1, wherein the recesses of the hidden mark are formed deeper than the recesses of the identifying mark.

8. A marking element described in Claim 1, wherein the recesses of the identifying mark are formed across the plural recesses of the background pattern, and the recesses of the hidden mark is formed inside of one of the recesses of the background pattern.

9. A marking element described in any one of Claims 1 to 8, wherein the base plate is a secondary electrolytic colored aluminum plate.

10. A marking element described in any one of Claims 1 to 9, wherein the identifying mark is a mark suggesting a business operator using the base plate as a mark, and the hidden mark is a mark comprising a coined word suggesting secretly the business operator,
